Europäisches Patentamt

European Patent Office

Office européen des brevets

(19)

(11) Numéro de publication: **0 054 979**
**B1**

(12) **FASCICULE DE BREVET EUROPEEN**

(45) Date de publication du fascicule du brevet: **17.04.85**

(51) Int. Cl.⁴: **F 16 H 9/10**, F 16 H 9/24

(21) Numéro de dépôt: **81200821.7**

(22) Date de dépôt: **17.07.81**

(54) **Variateur de vitesse à réglage continu.**

(30) Priorité: **22.12.80 BE 2058920**

(43) Date de publication de la demande:
**30.06.82 Bulletin 82/26**

(45) Mention de la délivrance du brevet:
**17.04.85 Bulletin 85/16**

(84) Etats contractants désignés:
**AT DE FR GB IT NL SE**

(56) Documents cités:
**CH-A- 94 734
DD-A- 46 134
DE-C- 131 390
FR-A- 694 693
FR-A-1 177 149
FR-A-1 568 806
FR-A-2 036 966
FR-A-2 117 819**

(73) Titulaire: **Severins, Petrus Nicolaas Charlotte
Kapelsestraat 8
B-2080 Kapellen (BE)**

(72) Inventeur: **Severins, Petrus Nicolaas Charlotte
Kapelsestraat 8
B-2080 Kapellen (BE)**

(74) Mandataire: **Donné, Eddy
M.F.J.Bockstael Arenbergstraat 13
B-2000 Anvers (BE)**

EP 0 054 979 B1

Courier Press, Leamington Spa, England.

## Description

La présente invention a trait à un variateur de vitesse à réglage continu, c'est-à-dire, en d'autres termes, à un mécanisme se prêtant à une transmission telle du nombre de tours d'un arbre à un autre arbre que la vitesse de rotation de cet autre arbre peut être réglée de manière continue.

Les variateurs de vitesse de ce genre conviennent à l'équipement de toutes sortes de moteurs, et cela aussi bien de moteurs stationnaires que de moteurs de véhicules ou similaires, et présentent le grand avantage d'une transmission positive du mouvement et d'une usure réduite au minimum des organes de transmission.

FR—A—2 036 966 d'écrit un variateur de vitesse qui se compose essentiellement de deux parties, à savoir une partie primaire comportant un élément rotatif attaqué par un moteur, un cône coaxial à l'axe de cet élément et déplaçable axialement par rapport à l'élément attaqué, des pièces montées coulissante le long des génératices de ce cône étant disposées autour de celui-ci, la distance de ces pièces coulissantes par rapport à l'axe autour duquel elles sont montées pouvant être variée par translation du cône, et un élément d'accouplement entre chacune desdites pièces coulissantes et ledit élément attaqué par le moteur; et une partie secondaire similaire à la partie primaire sauf que son élément rotatif qui correspond à l'élément attaqué de la partie primaire est un élément d'attaque, des moyens étant prévus qui, en coopération avec lesdites parties primaire et secondaire, assurent que le déplacement du cône de la partie primaire dans l'un ou l'autre sens provoque un déplacement opposé de même grandeur du cône de la partie secondaire, une courroie entourant les deux cônes, en coopérant avec les pièces montées coulissantes sur les cônes. Un tel variateur est defini dans le préambule de la revendication 1. Dans ce variateur connu et aussi bien dans sa partie primaire que dans sa partie secondaire, l'élément attaqué ou d'attaque et le cône sont montés sur le même axe de telle manière qu'ils puissent être entraînés en rotation par celui-ci; à cet effet, le cône présente des moyens appropriés qui rendent sa construction relativement difficile. En outre, par le présence de cet axe commun, le démontage d'une pièce défectueuse du variateur es difficile dans certains cas.

L'objet de la présente invention est un variateur du type susmentionné, mias ne présentant pas ces inconvénients.

Suivant l'invention, comme caractérisée dans la revendication 1 ce but est atteint par le fait que dans chaque partie, le cône et ledit élément attaqué, respectivement d'attaque, sont montés à rotation libre autour dudit axe.

Dans chacune des parties du variateur, le cône est donc d'une construction relativement simple puisqu'il ne doit pas être entraîné en rotation par l'axe sur lequel il est monté. En outre, par le fait que ce cône et l'élément attaqué ou d'attaque sont montés à rotation libre sur deux pièces différentes, cela facilite le démontage du variateur dans certains cas.

Les caractéristiques et avantages de mécanisme selon l'invention ressortiront plus clairement de la description détaillée suivante d'un exemple de mise en oeuvre préféré, donnée sans la moindre intention restrictive avec référence aux dessins annexés, où

La figure 1 représente une vue d'en dessus d'un variateur de vitesse à réglage continu selon l'invention;

La figure 2 représente une vue du mécanisme selon la figure 1, regardé dans le sens indiqué par la flèche F2 de cette dernière;

La figure 3 représente un coupe du mécanisme selon la figure 1, pratiquée suivant la ligne III—III de cette dernière;

La figure 4 représente un des organes de transmission du variateur de vitesse selon l'invention;

Les figures 5 et 6 représentant deux vues de mécanisme selon la figure 4, regardé dans les sens indiqués par les flèches F5 et F6 de cette dernière; et

La figure 7 représente une vue analogue à celle de la figure 4, mais d'une variante d'exécution.

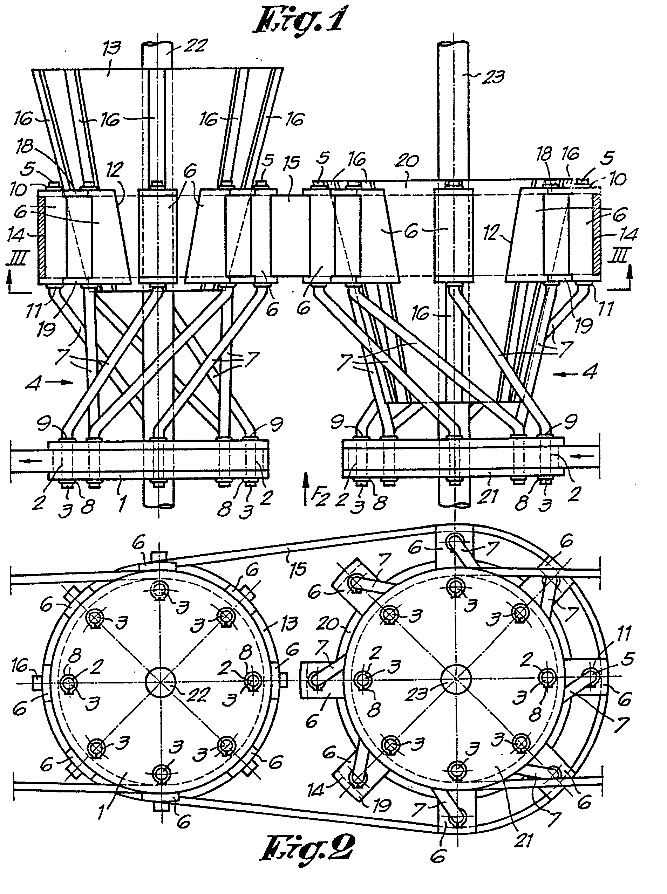

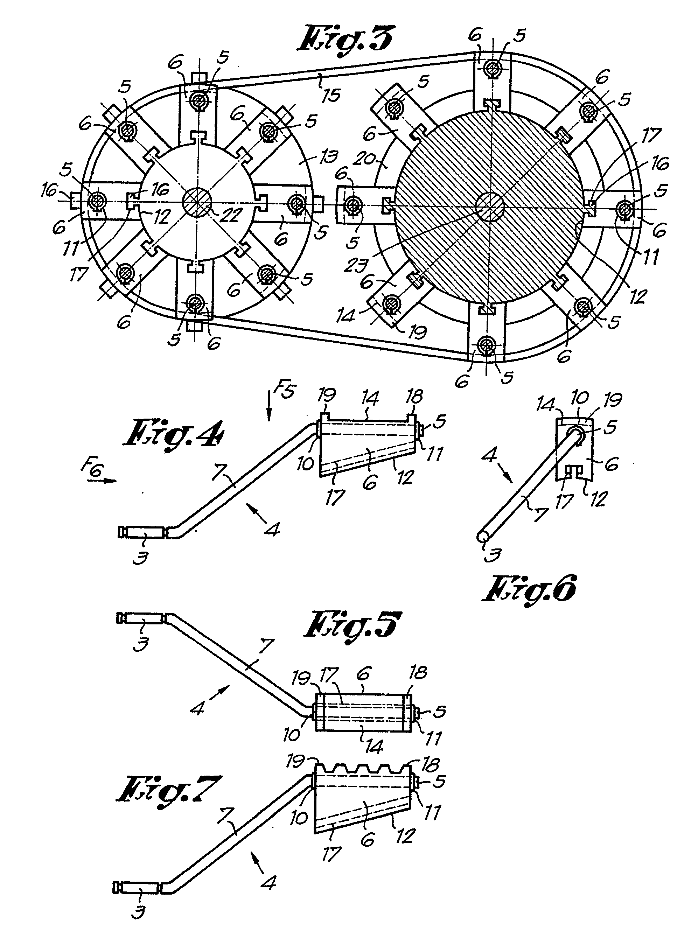

Comme on le voit en se reportant aux figures annexées, le variateur de vitesse selon le présent mode de mise en oeuvre de l'invention se compose essentiellement d'un premier élément 1 attaqué par un moteur et se présentant sous forme d'une poulie à courroie, d'un poulie à chaîne, d'une roue dentée ou de tout autre élément approprie, muni d'une pluralité de trous 2 disposés régulierement à des intervalles angulaires constants, où sont montés à rotation libre les bouts 3 de triangles 4 qui, à leur autre bout 5, sont montées à rotation libre en des pièces coulissantes 6.

Il est à noter que les bouts 3 et les bouts 5 desdites tringles 4 sont parallèles entre eux et que la partie intermédiaire 7 entre les bouts 3 et 5 des tringles 4 forme un angle déterminé avec les axes géométriques de ces bouts.

Les bouts 3 et 5 desdites tringles 4 sont, comme dit ci-dessus, montés à rotation libre, respectivement, dans la poulie à courroie, la roue dentée, la poulie à chaîne ou tout autre élément analogue 1, d'une part, et dans desdites pièces coulissantes 6, d'autre part, sans possibilité de translation axiale de ces bouts par rapport aux éléments qui les portent, par suite de leur blocage, par exemple au moyen de rondelles de blocage 8—9 et 10—11 prévues à chacun des bouts respectivement 3 et 5.

Chacune desdites pièces coulissants 6 se compose essentiellement d'un corps de forme trapézoïdale, dont la face inférieure 12 coopère de manière appropriée avec un élément conique 13 et la face supérieure 14 est dûment profilée en vue de sa coopération avec une courroie 15.

Afin d'assurer une coopération efficace, constante et indépendante du nombre de tours entre chacune des pièces coulissantes 6 et l'élément conique 13, est prévue sur ce dernier, pour chacune de ces pièces coulissantes, par exemple une saillie axiale en forme de T, avec laquelle coopère une gorge 17 profilée en T de la pièce coulissante 6 correspondante.

La face supérieure 14 est, de part et d'autre des pièces coulissantes 6, munie d'une saillie, respectivement 18 et 19, destinée à assurer à tout moment le positionnement correct de la courroie 15 par rapport aux pièces coulissantes.

Les figures montrent que la courroie 15, qui passe sur les pièces coulissantes 6 portées par le cône 13, passe également sur des pièces coulissantes analogues 6 montées avec possibilité de translation axiale sur un deuxième cône 20 et portant, tout comme décrit ci-dessus, le bout 5 d'une tringle 4, dont l'autre bout 3 est porté avec possibilité de rotation, mais sans possibilité de translation axiale, par une poulie à courroie, une poulie à chaîne, une roue dentée ou tout autre élément approprié 21.

Les figures montrent également que lesdits cônes 13 et 20 sont montés axialement par rappot à la poulie à courroie, poulie à chaîne, roue dentée ou autre pièce analogue correspondante, respectivement 1 et 21, par exemple à l'aide d'un arbre, respectivement 22 et 23, sur lequel les éléments 1 et 21 concernés sont montés à rotation libre par l'entremise d'un arbre creux ou d'une douille (non représentée) et qui porte, d'autre part, les cônes 13 et 20 avec possibilité de rotation libre, mais sans possibilité de translation axiale.

Pour la commande du dispositif selon l'invention est, en outre, prévu un mécanisme approprié susceptible de déplacer les cônes 13 et 20 l'un par rappot à l'autre d'une même valeur, mais en des sens opposés et se composant à cet effet, de manière aussi simple qu'efficace, par exemple d'une tringle-rie fixée soit aux cônes 13 et 20, soit aux arbres 22 et 23.

La commande d'un mécanisme de ce genre peut être automatique ou manuelle.

Le fonctionnement du variateur de vitesse selon l'invention, décrit dans les lignes précédentes, est des plus simples et se laisse décrire de la manière suivante.

La poulie à courroie, la poulie à chaîne, la roue dentée ou tout autre élément analogue 1, attaqué par un mécanisme de commande, tel qu'un moteur ou autre, attaque les différentes tringles 4 qui, à leur tour, commandent lesdites pièces coulissantes 6, qui portent la courroie 15. Celle-ci entraîne les pièces coulissantes 6 montées sur le cône 20 qui, par l'entremise des tringles 4, entraînent la poulie à courroie, la poulie à chaîne, la roue dentée ou tout autre élément analogue 21, dont le nombre de trous est déterminé par la position des cônes 13 et 20.

On obtient ainsi un variateur de vitesse à réglage continu, dont l'usure, telle que l'usure entre la courroie 15 et les pièces coulissantes 16, est réduite au minimum.

La figure 7 représente une variante d'exécution d'une pièce coulissante 6 destinée à coopérer avec une courroie trapézoïdale ou courroie en V.

Il va sans dire que les cônes de ce mode d'exécution double pourront être plus petits et que le rapport de transmission pourra être plus grand avec tous les avantages qui s'en suivent, à savoir un encombrement sensiblement moindre du variateur et une translation axiale aisée des cônes grâce à la compensation mutuelle des pressions latérales exercées par les pièces coulissantes sur les cônes.

**Revendications**

1. Variateur de vitesse à réglage continu, se composant essentiellement de deux parties, à savoir une partie primaire comportant un élément rotatif attaqué (1) par un moteur, un cône (13) coaxial à l'axe (22) de cet élément et déplaçable axialement par rapport à l'élément attaqué (1), des pièces montées coulissantes (6) le long des génératrices de ce cône (13) étant disposées autour de celui-ci, la distance de ces pièces coulissantes (6) par rapport à l'axe (22) autour duquel elles sont montées pouvant être variée par translation du cône (13), et un élément d'accouplement (7) entre chacune desdites pièces coulissantes (6) et ledit élément (1) attaqué par le moteur; et une partie secondaire similaire à la partie primaire sauf que son élément rotatif qui correspond à l'élément attaqué (1) de la partie primaire est un élément d'attaque (21), des moyens étant prévus qui, en coopération avec lesdites parties primaire et secondaire, assurent que le déplacement du cône (13) de la partie primaire dans l'un ou l'autre sens provoque un déplacement opposé de même grandeur de cône (20) de la partie secondaire, une courroie (15) entourant les deux cônes (13, 20) en coopérant avec les pièces montées coulissantes (6) sur les cônes, caractérisé en ce que, dans chaque partie, le cône (13, 20) et ledit élément attaqué (1), respectivement d'attaque (21), sont montés à rotation libre autour dudit axe (22, 23).

2. Variateur selon la revendication 1, caractérisé en ce que le cône (20) de la partie secondaire est monté en direction opposée à celle du cône de la partie primaire, ledit déplacement des cônes se faisant en sens opposé.

3. Variateur selon la revendication 1 ou 2, caractérisé en ce que lesdits éléments d'accouplement (7) entre chacune desdites pièces coulissantes (6) et l'élément attaqué (1) de la partie primaire ou l'élément d'attaque (21) de la partie secondaire se présentent sous forme de tringles, en ce que chaque tringle (7) se compose d'une tringle proprement dite munie de part et d'autre d'un bout recourbé, en ce que les bouts (3—5) de chaque tringle sont parallèles entre eux, en ce que ces tringles (7) sont fixées au moyen de ces bouts (3—5), d'une part, à une pièce coulissante (6) et à l'élément attaqué (1) de la partie primaire et, d'autre part, à l'élément d'attaque (21) de la partie secondaire, et en ce que lesdits bouts (3—5) desdites tringles (7) sont montés à rotation libre, mais sans possibilité de translation axiale dans les pièces coulissantes (6) et, respectivement, dans l'élément attaqué (1) et l'élément d'attaque (21) du variateur de vitesse.

**Patentansprüche**

1. Stufenloser Drehzahlregler, der im wesentlichen aus zwei Teilen besteht, d.h. aus einem Primärteil mit einem durch einen Motor angetriebenen Drehelement (1), einem mit der Welle (22) dieses Drehelements (1) koachsialen und in bezug auf dasselbe achsial verschiebbaren Kegelkörper (13), verschiebbar gemäss den Erzeugenden dieses Kegelkörpers (13) um ihn herum angeordneten Schiebern (6), deren Abstand von der betreffenden Welle (22) durch Verschiebung dieses Kegelkörpers (13) regelbar ist, und einer Kupplung (7) zwischen einemjeden der vorgenannten Schieber (6) und dem durch den Motor angetriebenen Element (1); und einem Sekundärteil, der dem Primärteil ähnlich ist, ausser der Tatsache, dass sein dem angetriebenen Element (1) des Primärelementens entsprechenden Drehteil ein Angriffsmittel (21) ist, wobei mit dem vorgenannten Primärteil und Sekundärteil zusammenwirkende Mittel vorgesehen sind, deren Aufgabe es its zu sichern, dass die Verschiebung des Kegelkörpers (13) des Primärteils in beiden Richtungen jedesmal eine entgegengesetzte Verschiebung gleichen Ausmasses des Kegelkörpers (20) des Sekundärteiles erzeugt, und ein um die beiden Kegelkörper (13, 20) laufender, mit den auf denselben angeordneten Schiebern (6) zusammenwirkender (Riemen (15) vorgesehen ist, dadurch gekennzeichnet dass in jedem der beiden Teilen der Kegelkörper (13, 20) und das angetriebene bzw. antreibene Element (resp. 1 und 21) freidrehend auf der vorgenannten Welle (22, 23) angeordnet sind.

2. Drehzahlregler gemäss dem Anspruch 1, dadurch gekennzeichnet, dass der Kegelkörper (20) des Sekundärteiles entgegengesetzt zum Kegelkörper (13) des Primärteiles angeordnet ist, wobei die Verschiebungen beider Kegelkörper (13, 20) in entgegengesetzten Richtungen stattfinden.

3. Drehzahlregler gemäss dem Anspruch 1 oder 2, dadurch gekennzeichnet, dass die Kupplungen zwischen den verschiedenen Schiebern (6) und dem angetriebenen Element (1) des Primärteiles oder dem antreibenden Element (21) des Sekundärteiles Stangen sind; jede Stange (7) aus einer eigentlichen Stange mit beiderseits einem gebogenen Ende besteht; die Enden (3, 5) jeder Stange gleichlaufend sind; die Stangen (7) mit diesen Enden (3, 5) einerseits an einem Schieber (6) und am angetriebenen Element (1) des Primärteiles und anderseits am antriebenen Element (21) des Sekundärteiles befestigt sind; und die Enden (3, 5) der vorgenannten Stangen (7) freidrehend, aber nicht achsialverschiebbar in den Schiebern (6) und im angetriebenen Element (1) bzw. im antreibenen Element (21) des Drehzahlreglers angeordnet sind.

**Claims**

1. Stepless variable speed regulator essentially consisting of two parts, viz. a primary part comprising a rotatable element driven (1) by a motor, a cone (13) coaxial with the axle (22) of said element and axially movable with respect to the driven element (1), sliding mounted pieces (6) along the generatrices of said cone (13) being arranged around the latter, the distance of said sliding pieces (6) to the axle (22) around which they are mounted being capable of being varied by translation of cone (13), and a clutch element (7) between each of said sliding pieces (6) and said element (1) driven by the motor; and a secondary part similar to the primary part except that its rotatable element corresponding to the driven element (1) of the primary part is a driving element (21), means having been provided which in co-operation with said primary and secondary parts ensure that the movement of cone (13) of the primary part in any direction generates an opposite movement of the same magnitude of cone (20) of the secondary part, a belt (15) encircling both cones (13, 20) by co-operating with the sliding mounted pieces (6) on the cones, characterized thereby that in each part the cone (13, 20) and said driven (1) or driving element (21) are mounted freely rotatable around said axle (22, 23).

2. Stepless variable speed regulator according to claim 1, characterized thereby that the cone (20) of the secondary part is mounted in the direction opposite to that of the cone of the primary part, said movement of the cones taking place in the opposite direction.

3. Stepless variable speed regulator according to claim 1 or 2, characterized thereby that said clutch elements (7) between each of said sliding pieces (6) and the driven element (1) of the primary part or the driving element (21) of the secondary part have the form of rods, that each rod (7) consists of a rod properly so called at both sides of a curved end, that the ends (3—5) of each rod are parallel to one another, that said rods (7) are fixed by means of said ends (3—5) at the one hand to a sliding piece (6) and to the driven element (1) of the primary part, and to the other hand to the driving element (21) of the secondary part, and that said ends (3—5) of said rods (7) are mounted freely rotatable but without possibility of axial translation in the sliding pieces (6) and in the driven element (1) and the driving element (21) respectively of the speed regulator.

*Fig.1*

*Fig.2*

0 054 979

*Fig.3*

*Fig.4*

*Fig.6*

*Fig.5*

*Fig.7*

2